# EUROPEAN PATENT SPECIFICATION

(11) **EP 1 280 318 B1**
(45) Date of publication and mention of the grant of the patent: **30.08.2006**
(21) Application number: 02255262.4
(22) Date of filing: 26.07.2002
(51) Int. Cl.: H04L 29/06, H04L 29/12

(54) **Method of forming a local mobility domain and a local mobility agent and apparatus therefor**
Verfahren zum Bilden eines lokalen Mobilitätsbereichs und eines lokalen Mobilitätsagenten und Vorrichtung hierfür
Procédé pour former un domaine de mobilité local et un agent de mobilité local et dispositif correspondant

(30) Priority: 27.07.2001 KR 2001045485
(43) Date of publication of application: 29.01.2003
(73) Proprietor: SAMSUNG ELECTRONICS CO., LTD., Suwon-City, Kyungki-do (KR)
(72) Inventor: Choi, Jin-hyeock, Seongnam-city, Kyungki-do (KR); Hwang, Hyo-sun, Dongdaemun-gu., Seoul (KR); Kang, Woo-shik, 422-1603 Cheongmyeong M. Kunyoung, Suwon-city, Kyungki-do (KR)
(74) Representative: Greene, Simon Kenneth

(56) References cited:
- SOLIMAN H ET AL: "Hierarchical MIPv6 mobility management" IETF MOBILE IP WORKING GROUP - INTERNET DRAFT, 13 September 2000 (2000-09-13), XP002249000 Retrieved from the Internet: <URL:http://community.roxen.com/developers /idocs/drafts/draft-soliman-mobi leip-hmipv6> [retrieved on 2003-07-24]
- PERKINS C E ET AL: "Optimized smooth handoffs in Mobile IP" PROCEEDINGS IEEE INTERNATIONAL SYMPOSIUM ON COMPUTERS AND COMMUNICATIONS, XX, XX, 6 July 1999 (1999-07-06), pages 340-346, XP002902009

## Description

The present invention relates to a method of forming a local mobility domain (LMD) and a local mobility agent (LMA), and more particularly, to a method of forming an LMD and an LMA based on Mobile IP and an apparatus thereof.

As the Internet has grown and as users have become more interested in mobile Internet access, the world is running out of IP addresses for network devices. With the drawbacks of the existing IPv 4 becoming more evident, a new protocol, known as IPv6, has been defined.

Mobile terminals having an access to the Internet under the IPv6 contain fixed home addresses and home agents. When the mobile terminal moves to a network other than the home network, the mobile terminal receives a care-of-address, which represents a new location of the mobile terminal.

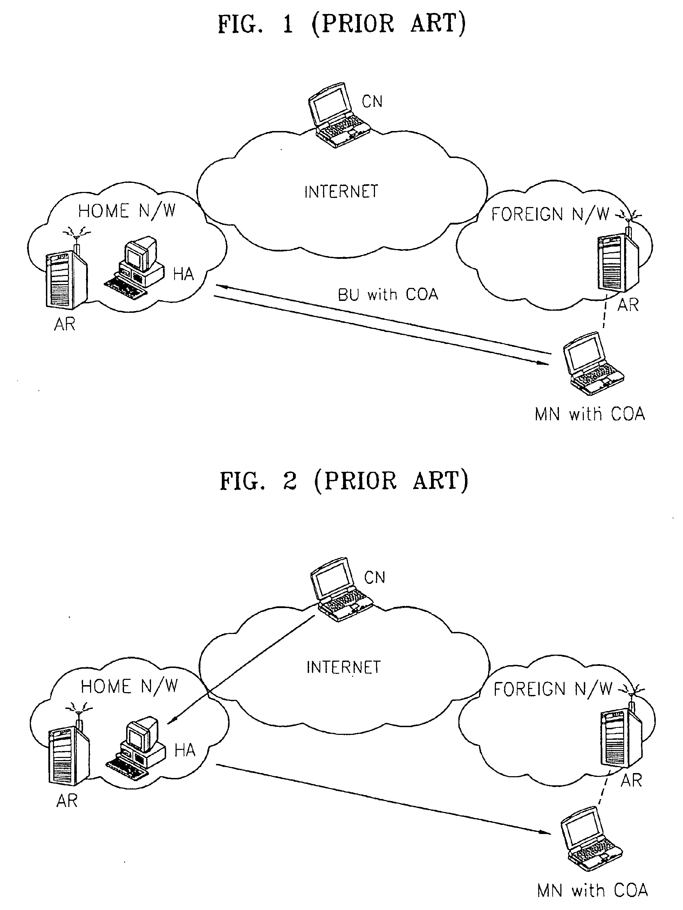

Referring to FIGS. 1 and 2, a mobile node (MN) reports a care-of-address (COA) to a home agent (HA). In the case that data targeting the MN is input to the home network of the MN, the HA receives the data to transfer it to the COA of the MN. In FIG. 1, abbreviations AR, CN, MN, BU, and COA denote an access router, a correspondent node, a mobile node, a binding update, and a care-of-address, respectively.

In the case that the home network is far from a present network, it is inconvenient to register every movement of the MN to the HA. In this case, the network is divided into LMDs, each domain containing an LMA, to operate as local HAs. The MN in a predetermined LMD receives a regional care-of-address (RCOA) and a local care-of-address (LCOA). In this case, the RCOA represents the location of the LMA in the LMD, and the LCOA represents the present location of the MN.

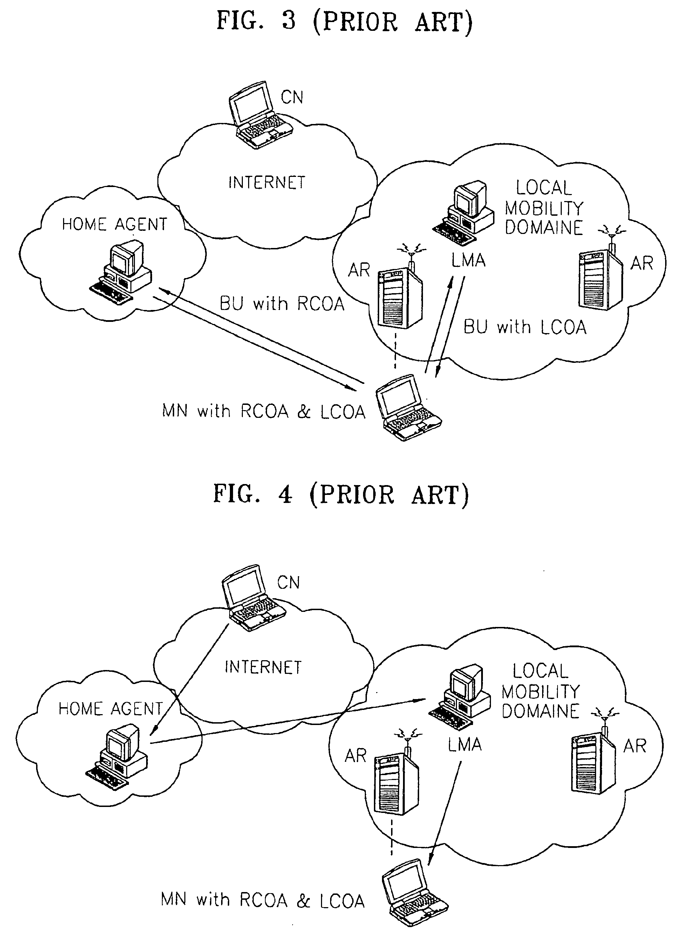

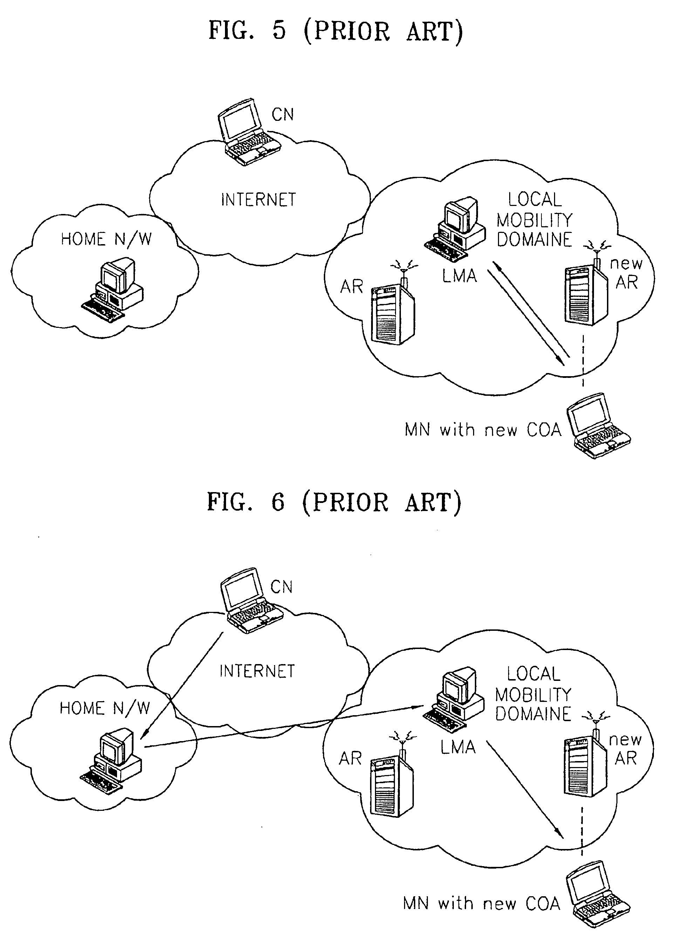

With reference to FIGS. 3 through 6, an MN registers a present location and the location of an LMA to an LMA and an HA, respectively. When data targeting the MN is input to a home network, the HA sends the data to the present LMA of the MN and the LMA transfers the data to the MN as shown in FIG. 4. If the MN moves within the LMD, the MN registers the present location to the LMA as shown in FIG. 5. The data transferred to the MN are transferred through the HA, the LMA, and a new access router (AR), as shown in FIG. 6. In this case, abbreviations RCOA and LCOA denote a regional care-of-address and a local care-of-address, respectively, while the other abbreviations are the same as those in FIGS. 1 and 2.

The conventional technology requires that a network manager should establish the LMD and LMA. Moreover, it is difficult to correct the LMD according to changes of the networks, and the LMA may become the point of failure for the entire network.

The IETF Mobile IP working group, internet draft "Hierarchial MIPv6 mobility management <draft-sol:man-mobileip-hmvvp6-0.6txt>", (2000) describes mobility management. An extension to MIPv6 provides a "Mobility Anchor Point" (MAP) which may be used as a COA or a RCOA. The MAP may be at any level, including the access router. Discovery is performed by advertising the relevant MAPs on the corresponding access routers.

According to the invention, there is provided a method according to claim 1.

According to another aspect of the invention, there is provided a network according to claim 6.

The present invention thus provides a method and apparatus for establishing a local mobility domain (LMD) and a local mobility agent (LMA) according to a movement of a mobile node (MN).

The advantages of the present invention will become more apparent by describing in detail preferred embodiments thereof with reference to the attached drawings in which:
FIG. 1 illustrates a method for registering a mobile terminal using IPv6;
FIG. 2 illustrates a method for transferring data when using a mobile terminal;
FIG. 3 illustrates a method for registering a localized mobility management;
FIG. 4 illustrates a method for transferring localized mobility management data;
FIG. 5 illustrates a method for registering the localized mobility management in moving;
FIG. 6 illustrates a method for transferring the localized mobility management data in moving;
FIG. 7 illustrates a local mobility domain (LMD) according to the present invention;
FIG. 8 illustrates a method for constituting an LMD and a local mobility agent (LMA) when a mobile node (MN) has first accessed a network according to the present invention;
FIG. 9 illustrates a method for constituting an LMD and an LMA when the MN moves within an LMD according to the present invention;
FIG. 10 illustrates a method for constituting an LMD and an LMA when the MN moves out of an LMD according to the present invention;
FIG. 11 is a flowchart for explaining a method of forming an LMD and an LMA according to the present invention;
FIG. 12 illustrates a device for establishing an LMA according to the present invention; and
FIG. 13 illustrates a method for re-establishing an LMA due to a local mobility management time-out according to the present invention.

The present invention will be described with reference to attached drawings. As described above, abbreviations AR, CN, MN, BU, COA, RCOA, LCOA, and LMD denote an access router, a correspondent node, a mobile node, a binding update, a care-of-address, a regional care-of-address, a local care-of-address, and a local mobility domain, respectively.

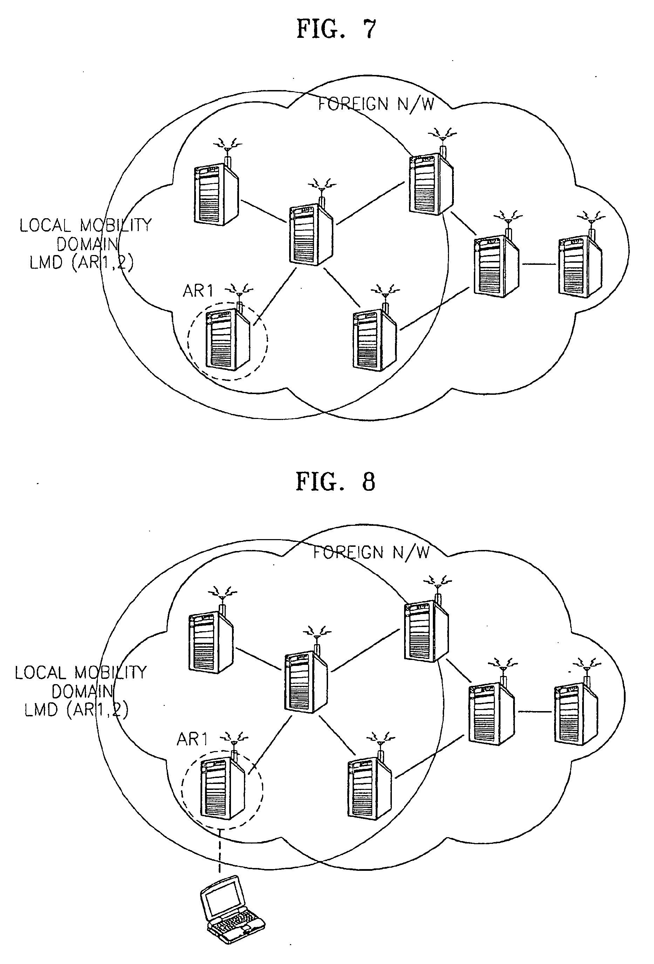

FIG. 7 illustrates an LMD according to the present invention, which is constituted by a center router and routers within a short distance. The distance between the routers is measured by hop-count.

In this case, a hop is a path for transferring a data packet from a router to the other router in a packet interchange type network. The hop-count for transferring one packet to a target position is stored in a packet header, in a network such as the Internet using Transport Communication Protocol/Internet Protocol (TCP/IP).

An LMD is represented as LMD(CR, N) in the present specification, wherein, CR stands for a center router and N stands for a natural number. Accordingly, the LMD(CR, N) stands for an assemblage of routers that exist within the hop-count of a natural number N from a center router. For example, as shown in FIG. 7, an LMD(AR1, 2), which is represented as a circle, surrounds an AR1.

The CRs of each LMD become the LMAs of the LMDs. For example, the AR1 in the LMD(AR1, 2) becomes the LMA as shown in FIG. 7.

A network manager establishes the natural number N to decide the size of the LMD. The network manager may change the natural number N according to the state of the network to vary the size of the LMD. When the natural number N is determined, the LMD is firmly fixed by the CR.

Each AR makes LMD lists, which specify the routers within a distance defined by the natural number N from each AR. The LMD list is the list of the routers in the LMD of an AR, and each router has a different LMD list.

FIG. 8 illustrates a method for constituting an LMD and an LMA when the MN has first accessed a network according to the present invention. When the MN is introduced into a new network, the AR to which the MN has had a first access becomes a first LMA of the MN. Then, an LMD is constituted according to the first LMA. The MN registers an RCOA and an LCOA to a home agent (HA) and the LMA, respectively. Then, data targeting the MN is transferred through the HA and the LMA.

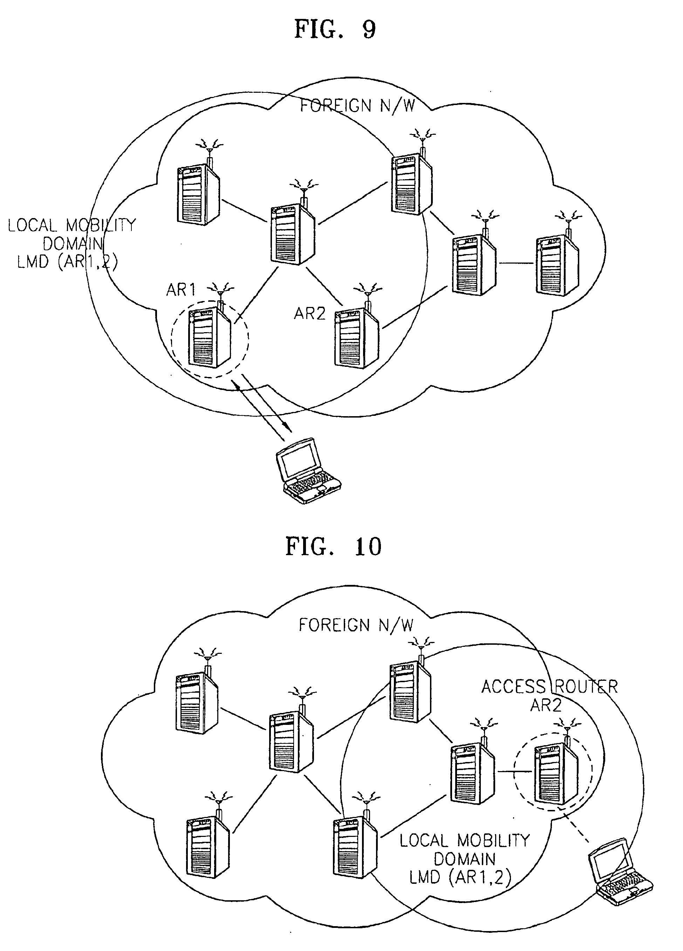

FIG. 9 illustrates a method for constituting an LMD and an LMA when the MN moves within an LMD according to the present invention. When the MN moves to the other AR, the MN checks the existence of the present LMA in the LMD list of the new AR. The existence of the LMA in the LMD list of the new AR means that the MN has moved within the LMD, therefore the MN registers a new LCOA to the present LMA.

FIG. 10 illustrates a method for constituting an LMD and an LMA when the MN moves out of an LMD according to the present invention. When the MN moves to a new AR, the MN checks the existence of the present LMA in the LMD list of the new AR. The absence of the LMA from the LMD list of the new AR means that the MN has moved outside of the LMD. Consequently, the new AR becomes a new LMA, and the MN registers new RCOA and LCOA to the HA and the new LMA, respectively, as in the case where the MN had the first access to the network.

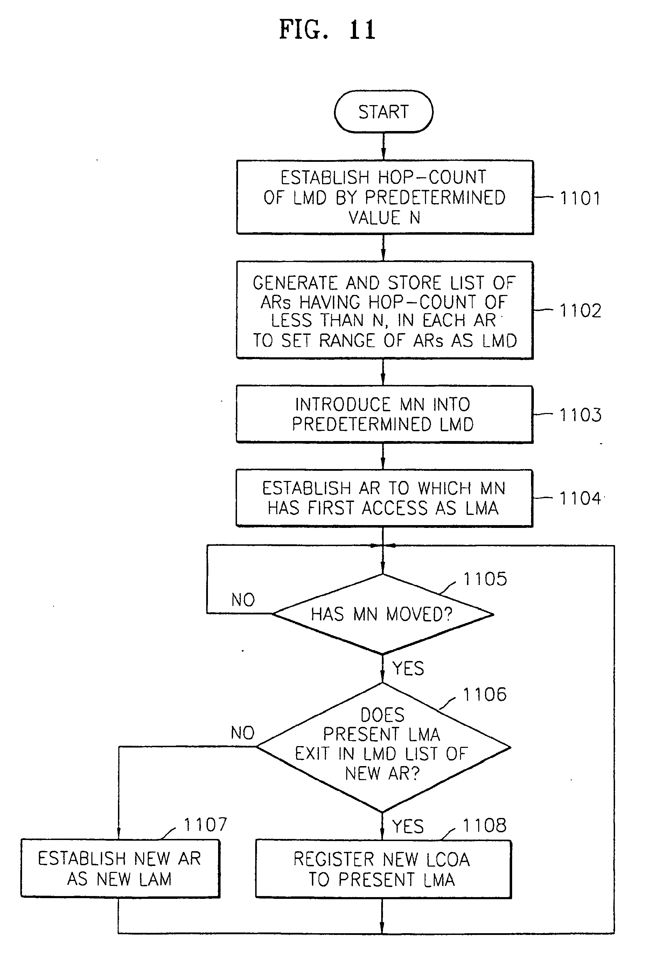

FIG. 11 is a flowchart for explaining a method of constituting an LMD and an LMA according to the present invention. A hop-count for LMDs is established by a predetermined value N, in step 1101. The lists of each AR that have the hop-count less than the value N from each AR are generated and stored to establish LMDs according to the lists, in step 1102. When an MN has accessed a predetermined LMD, in step 1103, the AR to which the MN has had a first access is established as an LMA to register an RCOA and an LCOA to an HA and the LMA, respectively, in step 1104. Then, the movement of the MN is determined, in step 1105. In the case that the MN has moved, the existence of the existing LMA is checked in a new AR, in step 1106. In the case that the LMA exists in the new AR, the MN registers a new LCOA to the present LMA, in step 1108. In the case that the LMA is absent from the new AR, the MN establishes the new AR as a new LMA, in step 1107, and registers new RCOA and LCOA to the HA and the new LMA, respectively. Then, step 1105 is repeated. In the case that the MN has not moved, step 1105 is repeated.

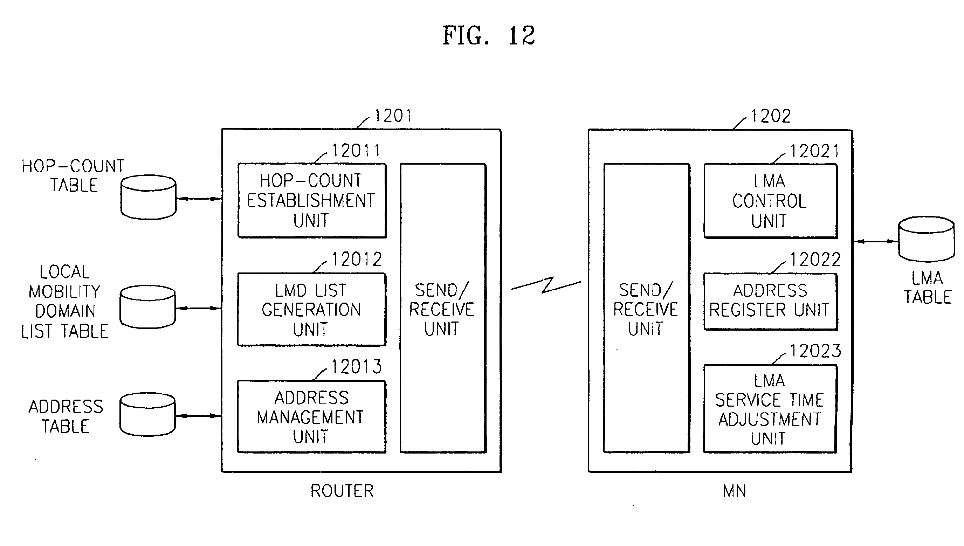

FIG. 12 illustrates a device for establishing an LMA according to the present invention. The device includes a router 1201 having a hop-count establishment unit 12011, an LMD list generation unit 12012, and an address management unit 12013, and an MN 1202 having an LMA control unit 12021, an address register unit 12022, and an LMA service time adjustment unit 12023.

The hop-count establishment unit 12011 receives and stores variations, which determine the size of an LMD, from a network manager. The LMD list generation unit 12012 searches ARs within a domain defined by a hop-count of the hop-count establishment unit 12011 to make and store the list of the ARs. The address management unit 12013 receives and stores an RCOA and an LCOA from the MN 1202 to transfer the RCOA to an HA.

When the MN 1202 is first introduced to a network, the LMA control unit 12021 establishes the AR to which the MN 1202 has a first access as an LMA. After the MN 1202 has moved, the LMA control unit 12021 determines the existence of the existing LMA in the LMD list of a new AR. In the case that the LMA exists in the LMD list of the new AR, the LMA control unit 12021 retains the existing LMA as the new LMA. In other case, the LMA control unit 12021 establishes the new AR as the new LMA.

Then, the address register unit 12022 receives new RCOA and LCOA to transfer and register to the LMA and the HA. When the MN 1202 has moved within the LMD, the address register unit 12022 transfers and registers the LCOA to the LMA while storing the RCOA and LCOA.

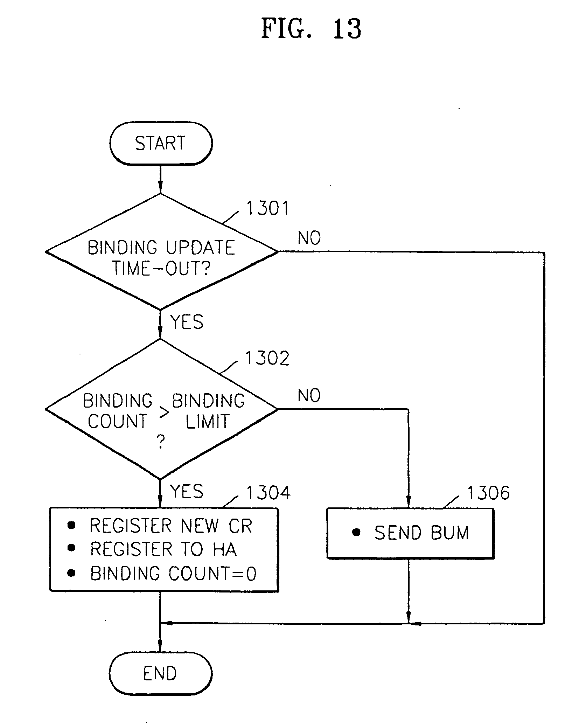

In the case that a predetermined binding lifetime has passed and a number of binding update messages (BUM) exceeds a predetermine value, the LMA service time adjustment unit 12023 establishes the present AR as a new LMA. FIG. 13 illustrates an operation of the LMA service time adjustment unit 12023 according to the present invention.

FIG. 13 illustrates a flowchart for explaining a method for re-establishing an LMA due to a local mobility management time-out according to the present invention. In the present invention, a service time can be limited when the MN receives a service by using the LMA. In this case, the service time is limited in order to reduce the frequency of needless use of the LMA by limiting a register time of the LMA. The service time is checked by counting a time limit field of a binding update and a number of BUMs that are transferred to the LMA. After transferring a predetermined number of BUMs, the present AR becomes a new LMA and the MN registers a new address to the HA.

A binding lifetime is checked to determine whether the binding lifetime has surpassed a predetermined value, in step 1301. In the case that the binding lifetime has elapsed, the number of BUMs is determined whether to be over a predetermined binding limit, in step 1302. When the number of the BUMs is over the predetermined binding limit, the MN registers a new CR and registers a present address to an HA while initializing the number of the BUMs as zero. In the case that the binding lifetime has been equal to or less than the predetermined value, in step 1301, the above procedures are not operated. In the case that the number of the BUMs is equal to or less than the predetermined binding limit, the MN transfers the BUM, in step 1304.

The above-described invention may be organized into a program recorded on media, so as to be operated in a common digital computer. The examples of the media include magnetic recording media, i.e., ROMs, floppy disks, and hard disks, optical recording media, i.e., CD-ROMs, and DVDs, and carrier waves, i.e., transfer through the Internet.

As a result, the present invention does not require manual establishment of an LMD and an LMA in a localized mobility management and actively varies the LMD according to changes in the network to improve convenience and efficiency in a network management. In addition, the AR is used as an LMA to distribute load on the network.

In order to prevent load on the LMA caused by the MN, which uses an outside AR as an LMA for a long period while not moving a lot, a time limit for receiving service from the LMA is set in the MN. This is realized in the MN without affecting the protocol to improve the entire performance of the network as well as the performance of the AR.

## Claims

1. A method of operation of a system having a plurality of access routers capable of communication with a mobile node, each router having a list of routers making up a local mobility domain of routers within a predetermined hop count of the router, the method including the steps of:
accessing a router (AR1) with a mobile node;
establishing the router (AR1) as the local mobility agent of the mobile node;
registering the router (AR1) as a local care-of-address and a regional care-of-address to a home agent and the local mobility agent;
accessing another router (AR2) with the mobile node;
determining the existence of the local mobility agent in the list of routers making up a local mobility domain in the new router;
if the local mobility agent is present in the list, registering the other router (AR2) as a new local care-of-address in the local mobility agent; and
**characterised by** establishing the other router (AR2) as the new local mobility agent of the mobile node and registering the other router (AR2) as a regional care-of-address to the home agent, if the local mobility agent is not present in the list.

2. The method of operation according to claim 1, further including the act of:
establishing the present router as a new local mobility agent to register new local care-of address and regional care-of address to the home agent and the new local mobility agent, respectively, when the mobile node exceeds a predetermined binding lifetime and the number of binding update messages exceeds a predetermined value.

3. A method of operationn according to claim 1 or 2, further comprising the steps of:
(a) establishing a predetermined hop-count value indicating the maximum number of hops from a center router (CR);
(b) generating a list of routers within a domain defined by the established hop-count valve surrounding a predetermined router; and
(c) establishing the routers included in the list as an LMD, which has the predetermined router as the CR.

4. A computer program for storing in routers in a network, the computer program including code for causing the network to implement a method according to any of claims 1 to 3 when run in said routers.

5. A computer program according to claim 4 stored on a recording medium.

6. A network comprising:
at least two routers, each router comprising:
a hop-count establishment unit for receiving and storing a hop-count;
a local mobility domain (LMD) list generation unit for establishing routers within a domain, which has a hop-count less than a predetermined value from a router, as an LMD to generate and store a list of the routers within the LMD; and
an address management unit for receiving and storing a regional care-of-address (RCOA) and a local care-of-address (LCOA) from a mobile node (MN) in the case that the router is established as the local mobility agent (LMA);
wherein the routers are arranged to cooperate with a mobile node to carry out the steps of accessing a router (AR1) with a mobile node;
to establish the router (AR1) as the local mobility agent of the mobile node; and
to register the router (AR1) as a local care-of-address and a regional care-of-address to a home agent and the local mobility agent;
further comprising a mobile node (MN);
the mobile node (MN) is arranged when accessing another router (AR2):
to determine the existence of the local mobility agent in the list of routers making up a local mobility domain in the new router;
if the local mobility agent is present in the list, to register the other router (AR2) as a new local care-of-address in the local mobility agent; and
**characterised by,** if the local mobility agent is not present in the list, to establish the other router (AR2) as the new local mobility agent of the mobile node and registering the other router (AR2) as a regional care-of-address to the home agent.

7. A network according to claim 6, wherein the mobile node includes:
an LMA control unit for deciding whether to establish the present router (AR1) to which the MN has an access as the LMA and for receiving and storing a list of the AR established as the LMA;
an address register unit for registering the RCOA and the LCOA to an HA and the LMA, respectively; and
an LMA service time adjustment unit for establishing the present AR to which the MN has an access as a new LMA when a binding lifetime has passed and a number of binary update messages (BUMs) exceeds a predetermined value; wherein the mobile node is arranged to access another router (AR2).

## Patentansprüche

1. Verfahren zum Betrieb eines Systems mit einer Mehrzahl von Zugangsroutern, die zur Kommunikation mit einem mobilen Knoten in der Lage sind, wobei jeder Router eine Liste von Routern besitzt, die einen lokalen Mobilitätsbereich von Routern in einem bestimmten Hop-Count des Routers bilden, wobei das Verfahren die Schritte umfasst:
Zugriff auf einen Router (AR1) mit einem mobilen Knoten;
Einrichten des Routers (AR1) als lokalen Mobilitätsagenten des mobilen Knotens;
Registrieren des Routers (AR1) als lokale Care-of-Adresse und regionale Care-of-Adresse für einen Home-Agenten und den lokalen Mobilitätsagenten; Zugriff auf einen anderen Router (AR2) mit dem mobilen Knoten;
Bestimmen des Vorhandenseins des lokalen Mobilitätsagenten in der Liste von Routern, die einen lokalen Mobilitätsbereich im neuen Router bilden;
wenn der lokale Mobilitätsagent in der Liste vorhanden ist, Registrieren des anderen Routers (AR2) als neue lokale Care-of-Adresse im lokalen Mobilitätsagenten; und
**gekennzeichnet durch** Einrichten des anderen Routers (AR2) als den neuen Mobilitätsagenten des mobilen Knotens und Registrieren des anderen Routers (AR2) als regionale Care-of-Adresse für den Home-Agenten, wenn der lokale Mobilitätsagent in der Liste nicht vorhanden ist.

2. Verfahren zum Betrieb nach Anspruch 1, ferner mit dem Vorgang:
Einrichten des vorhandenen Routers als neuen Mobilitätsagenten zum Registrieren einer neuen Care-of-Adresse und regionalen Care-of-Adresse für den Home-Agenten und auch den neuen lokalen Mobilitätsagenten, wenn der mobile Knoten eine bestimmte Bindungsdauer übersteigt und die Anzahl der Bindungsupdatemeldungen einen vorbestimmten Wert übersteigt.

3. Verfahren zum Betrieb nach Anspruch 1 oder 2, ferner umfassend die Schritte:
(a) Einrichten eines vorbestimmten Hop-Count-Werts, der die maximale Anzahl von Hops von einem Zentralrouter (CR, central router) angibt;
(b) Erzeugen einer Liste von Routern in einem Bereich, der durch den eingerichteten Hop-Count-Wert definiert ist, der einen vorbestimmten Router umgibt; und
(c) Einrichten der in der Liste enthaltenen Router als LMD, der den vorbestimmten Router als den CR aufweist.

4. Computerprogramm zum Speichern von Routern in einem Netzwerk, wobei das Computerprogramm ein Programm aufweist, das das Netzwerk veranlasst, ein Verfahren nach einem der Ansprüche 1 bis 3 zu implementieren, wenn es in dem Router läuft.

5. Computerprogramm nach Anspruch 4 gespeichert auf einem Aufzeichnungsmedium.

6. Netzwerk umfassend:
mindestens zwei Router, wobei jeder Router umfasst:
eine Hop-Count-Einrichtungseinheit zum Empfangen und Speichern eines Hop-Count;
eine Listenerzeugungseinheit für einen lokalen Mobilitätsbereich (LMD) zum Einrichten von Routern in einem Bereich, der einen Hop-Count von weniger als einem vorbestimmten Wert von einem Router aufweist, als LMD zum Erzeugen und Speichern einer Liste der Router in dem LMD; und
eine Adressenmanagementeinheit zum Empfangen und Speichern einer regionalen Care-of-Adresse (RCOA) und einer lokalen Care-of-Adresse (LCOA) von einem mobilen Knoten (MN) im Fall, dass der Router als lokaler Mobilitätsagent (LMA) eingerichtet ist;
worin die Router so angeordnet sind, dass sie mit einem mobilen Knoten kooperieren, so dass sie die Schritte zum Zugriff auf einen Router (AR1) mit einem mobilen Knoten ausführen;
den Router (AR1) als lokalen Mobilitätsagenten des mobilen Knotens einrichten; und
den Router (AR1) als lokale Care-of-Adresse und regionale Care-of-Adresse eines Home-Agenten und des lokalen Mobilitätsagenten registrieren;
ferner umfassend einen mobilen Knoten (MN);
der mobile Knoten (MN) wird angeordnet, wenn auf einen anderen Router (AR2) zugegriffen wird;
das Vorhandensein des lokalen Mobilitätsagenten in der Liste von Routern, die einen lokalen Mobilitätsbereich im neuen Router bilden, wird bestimmt;
wenn der lokale Mobilitätsagent in der Liste vorhanden ist, wird der andere Router (AR2) als neue Care-of-Adresse im lokalen Mobilitätsagenten registriert; und **gekennzeichnet durch**:
wenn der lokale Mobilitätsagent nicht in der Liste enthalten ist, wird der andere Router (AR2) als der neue lokale Mobilitätsagent des mobilen Knotens eingerichtet und der andere Router (AR2) als regionale Care-of-Adresse des Home-Agenten registriert.

7. Netzwerk nach Anspruch 6, worin der mobile Knoten beinhaltet:
eine LMA-Steuereinheit zum Entscheiden, ob der vorhandene Router (AR1), zu dem der MN Zugriff hat, als der LMA eingerichtet wird und zum Empfangen und Speichern einer Liste der AR, die als LMA eingerichtet sind;
eine Adressenregistereinheit zum Registrieren der RCOA und der LCOA für einen HA und auch den LMA; und
eine LMA-Betriebsdauereinstelleinheit zum Einrichten des vorhandenen AR, zu dem der MN Zugriff hat, als neuen LMA, wenn eine Bindungsdauer vergangen ist und eine Anzahl von binären Updatemeldungen (BUMs) einen vorbestimmten Wert übersteigt; worin der mobile Knoten angeordnet ist zum Zugreifen auf einen anderen Router (AR2).

## Revendications

1. Procédé d'exploitation d'un système ayant une pluralité de routeurs d'accès capables de communiquer avec un noeud mobile, chaque routeur comprenant une liste de routeurs composant un domaine de mobilité local de routeurs dans un compte de sauts prédéterminé du routeur, le procédé comprenant les étapes consistant à :
accéder à un routeur (AR1) avec un noeud mobile ;
établir le routeur (AR1) comme l'agent de mobilité locale du noeud mobile ;
enregistrer le routeur (AR1) comme une adresse temporaire locale et une adresse temporaire régionale dans un agent d'accueil et l'agent de mobilité locale ;
accéder à un autre routeur (AR1) avec le noeud mobile ;
déterminer l'existence de l'agent de mobilité locale dans la liste de routeurs composant un domaine de mobilité locale dans le nouveau routeur ;
si l'agent de mobilité locale est présent dans la liste, enregistrer l'autre routeur (AR2) comme une nouvelle adresse locale dans l'agent de mobilité locale ; et
**caractérisé par** l'étape consistant à établir l'autre routeur (AR2) comme le nouvel agent de mobilité locale du noeud mobile et enregistrer l'autre routeur (AR2) comme une adresse temporaire régionale dans l'agent d'accueil, si l'agent de mobilité locale n'est pas présent dans la liste.

2. Procédé d'exploitation selon la revendication 1, comprenant en outre l'étape consistant à :
établir le routeur présent comme un nouvel agent de mobilité locale pour enregistrer une nouvelle adresse temporaire locale et une nouvelle adresse temporaire régionale dans l'agent d'accueil et le nouvel agent de mobilité locale, respectivement, lorsque le noeud mobile dépasse une durée de vie de liaison prédéterminée et le nombre de messages de mise à jour de liaison dépasse une valeur prédéterminée.

3. Procédé d'exploitation selon la revendication 1 ou 2, comprenant en outre les étapes consistant à :
(a) établir une première valeur de compte de sauts indiquant le nombre maximum de sauts à partir d'un routeur central (CR) ;
(b) générer une liste de routeurs dans un domaine défini par la valeur de compte de sauts entourant un routeur prédéterminé ; et
(c) établir les routeurs compris dans la liste comme un LMD qui comprend le routeur prédéterminé comme CR.

4. Programme informatique destiné à être stocké dans des routeurs dans un réseau, le programme informatique comprenant un code destiné à amener le réseau à mettre en oeuvre un procédé selon l'une quelconque des revendications 1 à 3, lorsqu'il est exécuté dans lesdits routeurs.

5. Programme informatique selon la revendication 4 stocké sur un support d`enregistrement.

6. Réseau comprenant :
au moins deux routeurs, chaque routeur comprenant :
une unité d'établissement de compte de sauts destinée à recevoir et stocker un compte de sauts ;
une unité de génération de liste de domaine de mobilité locale (LMD) destinée à établir des routeurs dans un domaine, qui présente un compte de sauts inférieur à une valeur prédéterminée provenant d'un routeur, en tant que LMD pour générer et stocker une liste des routeurs dans le LMD ; et
une unité de gestion d'adresse destinée à recevoir et stocker une adresse temporaire régionale (RCOA) et une adresse temporaire locale (LCOA) provenant d'un noeud mobile (MN) dans le cas où le routeur est établi comme l'agent de mobilité locale (LMA) ;
dans lequel les routeurs sont agencés pour coopérer avec un noeud mobile pour réaliser les étapes consistant à accéder à un routeur (AR1) avec un noeud mobile ;
pour établir le routeur (AR1) comme l'agent de mobilité locale du noeud mobile ; et
pour enregistrer le routeur (AR1) comme une adresse temporaire locale et une adresse temporaire régionale dans un agent d'accueil et l'agent de mobilité locale ;
comprenant en outre un noeud mobile (MN) ;
le noeud mobile (MN) est agencé lors de l'accès à un autre routeur (AR2) ;
pour déterminer l'existence de l'agent de mobilité locale dans la liste composant un domaine de mobilité locale dans le nouveau routeur ;
si l'agent de mobilité locale est présent dans la liste, pour enregistrer l'autre routeur (AR2) comme une nouvelle adresse temporaire locale dans l'agent de mobilité locale ; et
**caractérisé en ce que**, si l'agent de mobilité locale n'est pas présent dans la liste, pour établir l'autre routeur (AR2) comme le nouvel agent de mobilité locale du noeud mobile et enregistrer l'autre routeur (AR2) comme une adresse temporaire régionale dans l'agent d'accueil.

7. Réseau selon la revendication 6, dans lequel le noeud mobile comprend :
une unité de commande LMA destinée à décider d'établir ou non le routeur présent (AR1) auquel le MN accède comme le LMA et destinée à recevoir et stocker une liste de l'AR établi comme le LMA ;
une unité d'enregistrement d'adresse destinée à enregistrer la RCOA et la LCOA dans un HA et le LMA, respectivement ; et
une unité d'ajustement de temps de service de LMA destinée à établir l'AR présent auquel le MN accède comme un nouvel LMA lorsqu'une durée de vie de liaison a expiré et un nombre de messages de mise à jour binaires (BUM) dépasse une valeur prédéterminée ; dans laquelle le noeud mobile est agencé pour accéder à un autre routeur (AR2).
